# EUROPEAN PATENT APPLICATION

(11) **EP 3 952 206 A2**
(43) Date of publication of application: **09.02.2022**
(21) Application number: 21180718.5
(22) Date of filing: 21.06.2021
(51) Int. Cl.: H04L 9/32, H04L 9/08, H04L 9/14

(54) **ANONYMIZED VOTING METHOD AND A DEVICE FOR ANONYMOUS VOTING**

(30) Priority: 19.06.2020 PL 43437820
(71) Applicant: Babula, Damian, 30-733 Kraków (PL)
(72) Inventor: Babula, Damian, 30-733 Kraków (PL); Maj, Rafa, 32-600 Liszki (PL)
(74) Representative: Bartula-Toch, Marta

(57) **Abstract**

The invention concerns a method of anonymous voting, in particular remote voting, which allows the voting to be universal, secret and conducted in a way that restricts the possibility to sell a vote or the possibility for third parties to exert influence on the way of casting a vote and on the device for anonymous voting. The solution covers in particular the method of granting rights to vote, anonymisation of the voting entity, casting and summarising votes, and makes it possible for each participant of the voting to check whether it was properly conducted.

## Description

The invention concerns a method of anonymous voting, in particular remote voting, which allows the voting to be universal, secret and conducted in a way that restricts the possibility to sell a vote or the possibility for third parties to exert influence on the way of casting a vote and on the device for anonymous voting. The solution covers in particular the method of granting rights to vote, anonymisation of the voting entity, casting and summarising votes, and makes it possible for each participant of the voting to check whether it was properly conducted.

One of the technologies that allow for anonymous voting is the blockchain technology. Blockchain is a form of decentralised, distributed database created in an open model. This means that a copy of the database is stored on many computers interlinked to form a network. Records in the database are organised in blocks, each block having a specific capacity that limits the number of records stored therein, and when that number is achieved, a next block is generated. Each further block contains a hash of the previous block, generated with the cryptographic hash function, thus linking the blocks into a form of a chain. The entries, called transactions, are a reflection of agreements, communications or exchanges made with the participation of at least two parties. The transactions are digitally signed with the public key cryptography, which assigns the user to a pair of keys, one of which is a private key known only to that user, and the other one is a public key made available for information to other users. The user uses the public key for example to encrypt messages, and the private key to read them. A transaction may be recorded in the appropriate block once it is placed in the pool of non-recorded transactions, where each transaction must first be approved by authorised users. In the block record, the transaction is open and available to all users for review. A transaction once recorded with the hash function additionally becomes unchangeable, in particular irremovable from the blockchain.

From description EP3420675B1, we know a blockchain-based vote counting system that allows for secure voting. The method includes the following steps: assigning one token to at least one previously indicated entity, wherein the indicated token is represented by the public key and an address in the blockchain; retaining the list of addresses related to at least one entity or token, wherein the list of addresses is represented in the transaction script in the blockchain; making a loop with an electronic device to count the number of one or more events generated by the specified entity by transferring the list of addresses for storage in an alternative blockchain stack, removing the address from the alternative stack once the event for that address has been counted, and continuing the looping until the list of addresses is no longer empty. The method is characterised by the fact that the event may be an entity casting a vote or making a decision, and that the event count is stored in the blockchain or in its alternative stack. A token is assigned and delivered to an entity with the use of an encoded exchange protocol. The list of public keys associated with entities or tokens is stored by an electronic device. The list of private keys and interlinks between identities of the entities and the tokens assigned thereto is not stored or is permanently deleted. The information on the generated loops is stored in the transaction within the blockchain as metadata. A cryptographic hash function is generated for the loop, which preferably stores a cryptographic hash within the blockchain transaction. The electronic device according to the method is also used to monitor the blockchain status for transactions that use a cryptographic hash referring to the loop, and to monitor the values generated or received by that device as well as the source signals or data delivered by the blockchain.

The described solution concerns the organisation of anonymous voting carried out through an electronic device within a decentralised or distributed database managed in the blockchain technology. The essence of the invention within the method consists in that the voting is assigned an individual serial number (SN). Before taking part in the voting, an entity (E) generates its own identifier (ID1) having the form of a pair of keys that includes a private key (PR1) and a public key (PU1), these being a combination of bits unique to each entity (E). The right to participate in the voting is given to the entity (E) by assigning the voting right to its identifier (ID1). The identifier (ID1) allows for generating any number of subsequent identifiers (ID1+n) being pairs of keys (PR1+n, PU1+n), but the right to vote is assigned only to the last generated identifier (ID1+n). The entity (E) starts to vote, where all activities are performed by an anonymous computer network. The procedure is participated by an external entity (EE), being any randomly chosen computer within the blockchain. It anomymises the identifiers of voting participants by randomly dividing, at least once, the entities (E) authorised to participate in the voting into groups. Each entity (E) within the group generates for itself a new identifier (ID1+n+1) in the form of a new pair of keys (PR1+n+1, PU1+n+1), then each entity (E) within the group anonymously places its new public key (PU1+n+1) in the pool. Having received the keys from all entities (E) in the group, the external entity (EE) discloses the contents of the pool, and each entity verifies the number of keys and the presence of its public key (PU1+n+1) in the disclosed pool and confirms that with the private key (PR1+n) by signing the list of public keys contained in the disclosed pool. At the end, the entity (E), using the right to vote assigned to its public key (PU1+n+1), anonymously casts a vote in the voting (SN), which involves generating a transaction and placing it in the pool of non-recorded transactions visible to other users. Having placed a transaction in the pool, authorised users (miners) commit themselves to recording the transaction in the appropriate blockchain, where it will be visible to all users. If the transaction is not recorded in the appropriate blockchain, the entity (E) records it by itself in another chosen blockchain that was intended for carrying out this voting. When casting a vote, the entity (E) receives a voting confirmation, and the voting result is calculated by each entity (E) individually, and the correctness of the voting is checked by each entity (E) individually.

Preferably the granting of the right to participate in the first voting covers, subsequently: a one-off personal verification of the entity's (E) identity by an authorised person, assigning the entity's identity with the public key (PU1) it has generated, and storing complete information about the granted right in the appropriate blockchain. The right to participate in subsequent votings is granted to the entity from time to time, separately for each voting and remotely.

Preferably, at the stage of casting votes, the entities (E) participating in the voting are randomly divided into further groups whose members create a common password known to all of them and used to authorise the entire mutual communication, which groups include at least 1 member and are used to mix the votes so that, during the mixing, the entities (E) in the group at least once anonymously send the external entity an inquiry (Z1) about the preferences regarding the cast of the vote by other entities in the group and regarding the proposal that each entity in the group creates one new public key, and the external entity (EE), which is changed before each subsequent inquiry (Z1+n), sends an inquiry (Z1) to each entity (E) in the group, and when the replies are given, the preferences and the proposed new public keys are collected both by the external entity (EE) and by each entity (E) and presented to the entities (E) in the group as the proposed voting result in a summarised form along with a list of new public keys, which are evidence that the voting procedure has been properly completed, and the entities (E) accept the outcomes using private keys (PR1+n), only if no person from the group asked other members (anonymously) to cancel the procedure, and in the list of new public keys, they see (each one only once) their new public key, and the number of new keys and the number of votes are equal to the number of persons in the group, and the voting was either unanimous or only one entity (E) wants to vote for an option other than the other entities (E), once the proposed results are accepted by all entities (E) in the group, they are counted as votes cast, and the entities lose the right to further participation in the voting, but the entities (E) from the groups in which the proposed results were not accepted are divided into further groups, and the procedure is re-conducted until the last authorised entity (E) accepts the results.

Preferably the anonymous computer network uses onion routing.

Preferably the data transmission via the anonymous network is carried out using an encryption scheme based on homomorphic encryption or zero knowledge proof selected in such a way that, when user X sends data to recipient Y via nodes ABC, user X is unable to predict the contents of specific intermediate steps of the processes of decrypting his message encrypted collectively into nodes ABC.

Preferably the electronic device has its identifier (ID) in the form of a pair of keys: a private key and a public key, where the identifier (ID) allows for generating further identifiers (ID1+n).

The essence of the invention in terms of the device consists in that the device for anonymous voting includes a battery 1, at least one SD memory card reader 2, integrated internal storage 3, micro-controller of the system performing cryptographic operations 4, a system that communicates with the external device 5, and the master system 7, and accommodates at least one Faraday cage 8.

Preferably the device has in integrated display 11, an integrated keyboard 12, and the system communicating with the external device 5 has an integrated USB port 13 and a printed module 14 that enables the printing of activity history.

Preferably the device is divided into a private area 9, intermediate area 10 and external area 28, which are separated from one another with a Faraday cage 8, where the private area 9 includes the master system 7, the intermediate system 10 includes a system performing cryptographic operations 6, and the external system includes a display 11, integrated keyboard 12 and the system communicating with the external device 5.

Preferably the device has its own identifier (ID1) having the form of a pair of keys: a private key (PR1) and a public key (PU1), and is paired with the electronic device once the displays 11 of both devices show their identifiers (ID1), and the entity (E1) verifies them for correctness and confirms it using the device for anonymous voting, which, having been paired with the electronic device, allows the entity (E1) to affix an electronic signature with the entity's (E1) private key (PR).

Preferably the device has at least one switch system 15 that includes a plug 22, contact 23, drive system 24, micro-controller 25, battery 26 and buffer 27, wherein the switch system 15 switches the device from mode I into mode II, where in mode I the intermediate area is charged via the USB port 13, downloads or buffers data from outside and sends outside the buffered data received in mode II, and in mode II the intermediate area 10 feeds and charges the private area 9, transmits the buffered external information received in mode I to the private module 9, and buffers the data originating from the private module 9.

Preferably the integrated internal storage 3 of the device is encrypted by symmetric encryption.

Preferably the integrated internal storage 3 of the device has more than one partition, each partition having a separate access password, wherein one partition stores information on actions actually taken during the voting, and the other partitions store artificially generated information on actions being different from those actually taken during the voting. Preferably the device has a tight external enclosure 16 having a micro-controller 17 with a timer system 18 and an integrated memory 19 as well as a mechanical or digital lock 20, which are jointly fed by the battery 21 and record all attempts to access the device, and each record is signed with a current private key (PR1+n) of the device, and then a new identifier (ID1+n+1) is generated containing a pair of keys (PR1+n+1, PU1+n+1), while the previous keys (PR1+n, PU1+n) are deleted.

Preferably, when not used by the entity (E), the device performs random operations analogous to those performed during normal use.

The main benefit of the method according to the invention is that it enables remote voting conducted in compliance with the principles of universality and secrecy. The method ensures higher security compared to conventional voting, in particular such conducted on a physical medium. The increased security is contributed by the use of the blockchain technology based on the public key cryptography and the checksums that build the blockchain. Casting a vote in the voting is, in this case, equivalent to generating a transaction. Transactions are digitally signed with the key cryptography and are open, though the users remain anonymous. Transactions are called nodes and, once confirmed to be correct, are added to the replicated and time-stamped transaction log called block. The Blockchain itself, in its essence, constitutes a specific decentralised and distributed transaction log. The block, being a basic component of a chain, consists of a header and data, i.e. transactions. The header stores, for example, a reference to the previous block in the chain (hash), a block creation time stamp, and the root of the hash tree. The size of a block depends on a particular implementation and the characteristics of the implementation.

The disclosed method accelerates the processes of voting and obtaining the final results through the automation of vote counting. A voting conducted according to the invention prevents the casting of a vote in lieu of another person without their consent, and makes it impossible to ignore a cast vote, thus increasing the credibility of the final results. The fact that the vote processing system is not centralised reduces the risk of invalidating the voting due to a system failure or data loss. According to the described method, it is difficult to buy votes and to induce the users to vote in a specified way being contrary to their objectives. An advantage of the disclosed device is that it prevents a leak or theft of the user's private key. It maximises the security of voting, for example by preventing the casting of a vote by a person other than that authorised to vote.

The subject of the inventions has been presented in the following embodiments and in the example drawings, where:
Fig. 1 - General diagram of the verification of entity's identity and of granting it the right to vote
Fig. 2, 3 - Diagram of the anonymisation of the entity's public key
Fig. 4, 5 - Diagram of storing a transaction in a blockchain

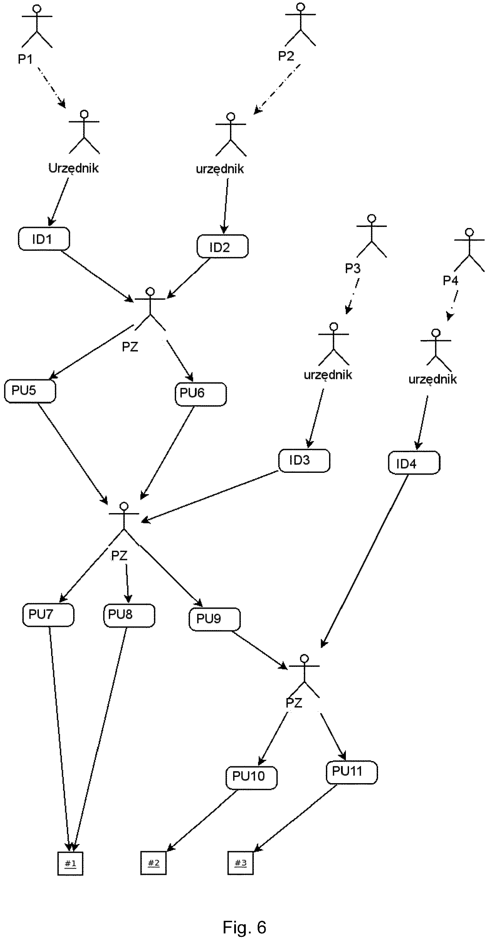

Fig. 6 - Diagram of voting participated by 4 entities. Their identities are confirmed by an official, and they are given the right to vote. Then the procedure of key anonymisation by an external entity is carried out, and a vote is cast for one of 3 candidates.

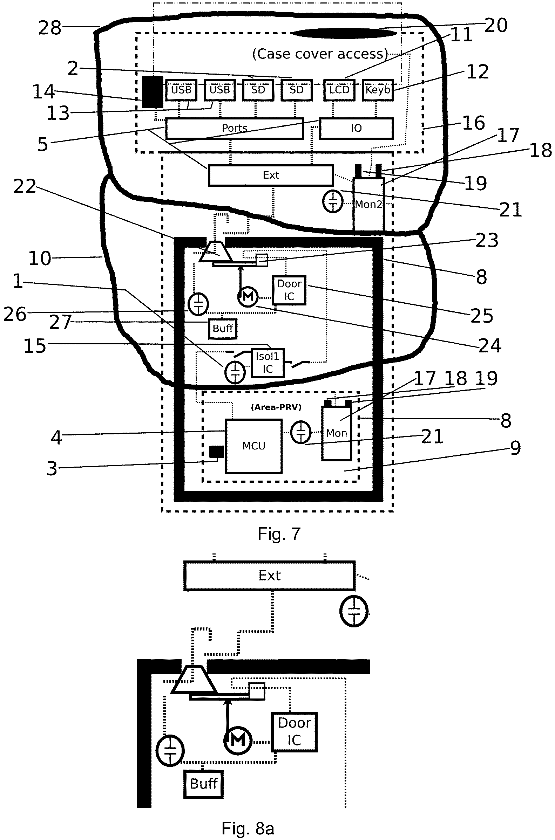

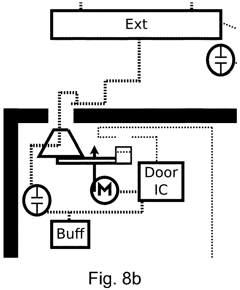

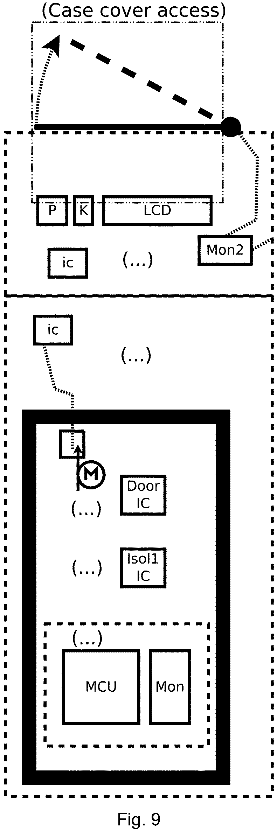

Fig. 7, 8, 9 - Structural diagrams of the device

### Example I

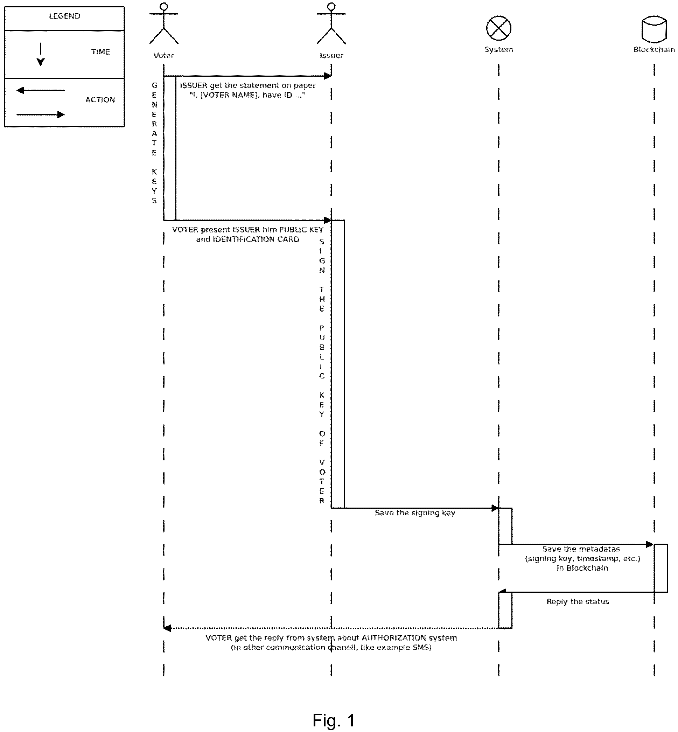

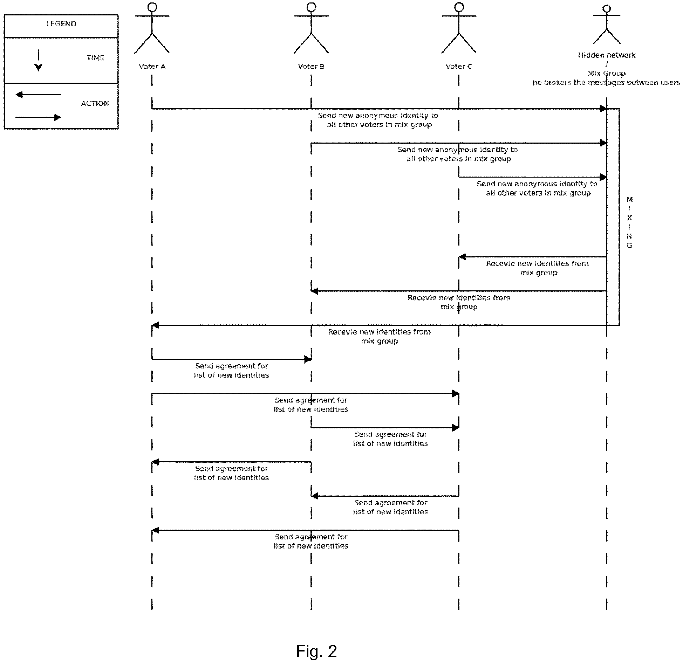

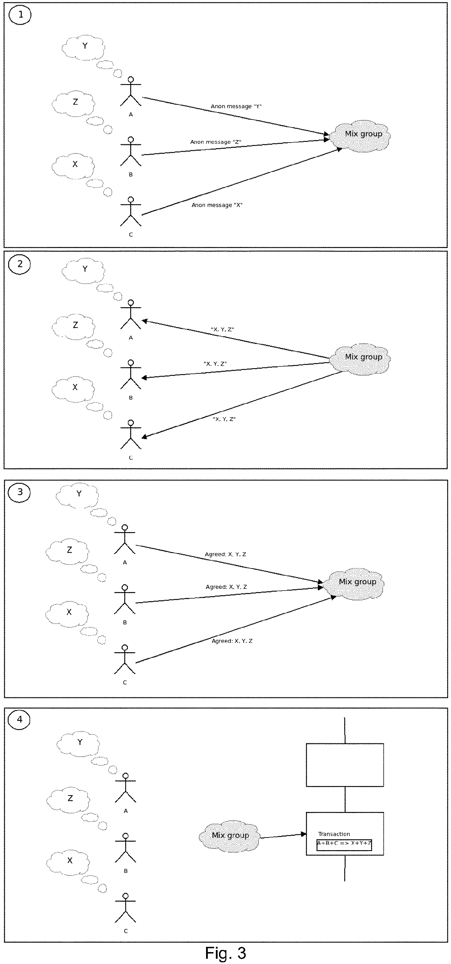

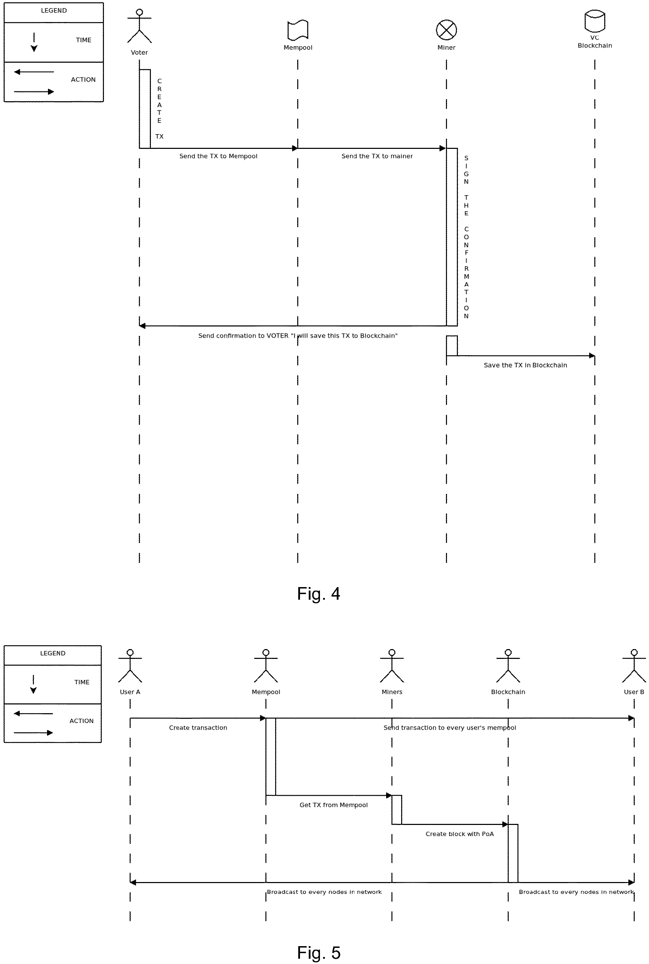

Using a computer, an entity (E1) generates its own identifier (ID1) having the form of a pair of keys that includes a private key (PR1) and a public key (PU1), being unique bit combinations. Before taking part in the first voting, the identity of the entity (E1) must be verified by an authorised person by checking its ID, assigning its identity with the generated identifier, and storing that information in the database. The authorisation process is shown in the drawing - fig. 1. To this end, the entity (E1) goes to an appropriate office where an authorised person verifies its identity. After a proper verification, the entity's (E1) public key (PU1) is assigned the voting right. The information on the granted voting right is stored in a decentralised or distributed database managed in digital form with the use of the Blockchain technology. The entity (E1) generates a new identifier (ID2), consisting of a pair of keys (PR2 and PU2), which takes over the voting right granted to the entity. Further activities are performed via an anonymous computer network that uses onion routing. Examples of such networks include Tor, i2p or Mashnet network. Before the voting, an external entity (EE), being a randomly chosen computer participating in the Blockchain, divides the voting entities (E) into random groups to hide the identity of each entity (E). The process is presented in the drawings - Fig. 2 and Fig. 3. Having been assigned to a group, an entity (E1) generates for itself a new identifier (ID3) that consists of a pair of keys (PR3 and PU3). This is done by each entity (E) in the group. Then all entities (E) anonymously place their current public keys (PU) in the pool. Having received the keys from all entities in the group, the external entity (EE) mixes the keys and discloses the contents of the pool to the other entities (E). The entity (E1) checks the list of disclosed keys for conformity of the number of keys (PU) in the pool with the number of entities (E) in the group and for the presence of its public key (PU3). The same activity is performed by each of the other entities (E) in the group. After a positive verification, the entity (E1) approves the pool of keys using its private key (PR2), by signing the list of disclosed keys. Once all entities (E) have approved the list, they can use the new, anonymous voting keys. To cast a vote, the entity (E1), using the voting right assigned to its public key (PU2), anonymously casts a vote in the voting (SN), which involves generating a transaction and placing it in the pool of non-recorded transactions visible to other users. Having placed a transaction in the pool, authorised users (miners) commit themselves to recording the transaction in the appropriate blockchain, where it will be visible to all users. The process is shown in the drawing - Fig. 4. Should the users fail to record a transaction in the appropriate blockchain, the entity (E1) records the transaction by itself in another blockchain chosen from among the blocks selected to carry out the voting. After casting a vote, the entity (E) receives a voting confirmation, and the voting result is calculated by that entity individually, which additionally allows it to check for whether the voting is conducted properly.

### Example II

The entity (E1) generates for itself an identifier and undergoes identity verification, as described in example I. The entity (E1) generates a new identifier (ID2), consisting of a pair of keys (PR2 and PU2), which takes over the voting right granted to the entity. Further activities are performed via an anonymous computer network that uses onion routing. Before the voting, the external entity (EE) divides the voting entities (E) into random groups to hide the identity of each entity (E). Having been assigned to a group, an entity (E1) generates for itself a new identifier (ID3) that consists of a pair of keys (PR3 and PU3). This is done by each entity (E) in the group. Then all entities (E) anonymously place their current public keys (PU) in the pool. Having received the keys from all entities in the group, the external entity (EE) mixes the keys and discloses the contents of the pool to the other entities (E). The entity (E1) checks the list of disclosed keys for conformity of the number of keys (PU) in the pool with the number of entities (E) in the group and for the presence of its public key (PU3). The same activity is performed by each of the other entities (E) in the group. After a positive verification, the entity (E1) approves the pool of keys using its private key (PR2), by signing the list of disclosed keys. Then the entity (E1) generates another identifier (ID4), consisting of a next pair of keys (PR4 and PU4), and again mixes the keys within another random group of entities (E), repeating all the previous activities. Having completed a series of several dozen key mixing procedures, the entity (E1) and other entities authorised to vote are randomly divided into groups consisting of 10 entities. The entity (E1) sends to the external entity (EE) an inquiry, addressed to the other entities (E) in the group, about their preferences regarding the voting. The other entities also send inquiries (Z1) to the external entity (EE). Having collected the inquiries, the external entity (EE) sends them to all entities (E) in the group, and they respond according to their preferences. In this example, two options were available in the voting: "candidate 1" and "candidate 2". The external entity (EE) collects the responses of the entities (E) and presents them as a sum. "Candidate 1" received 10 votes, and "candidate 2" received 0 votes. Thus the entities (E) accept the aggregate result by signing it with the private key (PR). Further part of the voting is similar as in example I.

### Example III

This example describes a device for anonymous voting used for authorising an entity (E1) during voting. The device consists of the main battery 1, two SD memory card readers 2, integrated internal storage 3, micro-controller performing cryptographic operations 4, a system that communicates with the external device 5, and the master system 7, and is divided into a private area 9, intermediate area 10 and external area 28, which are separated from one another by Faraday cages 8. The private area 9 includes the master system 7, the intermediate area 10 includes the system performing cryptographic operations 6, and the external area includes an integrated display 11, a keyboard 12 and the system communicating with the external device 5, which has two integrated USB ports 13, one of which is connected to a print module 14. The device has its own identifier (ID) made as a pair of keys: a private key and a public key, where the identifier (ID) enables the generation of further identifiers (ID+1), and when it is not used by the user, it performs random operations similar to those carried out during normal use. The device also has two switch systems 15 that consist of a plug 22, contact 23, drive system 24, micro-controller 25, battery 26, and buffer 27. The integrated internal storage is encrypted with symmetric encryption, based on the LUKS protocol 2. The device has a tight enclosure that accommodates all the mentioned components and has a micro-controller 17 with a timer system 18 and integrated memory 19 as well as a mechanical or digital lock 20, all of which are fed by the battery 21 and monitor all attempts to access the device. In case of any attempt to access the device, a log is created and signed with the current private key (PR1) of the device, and then a new identifier (ID2) is created that consists of a pair of keys (PR2, PU2), while the previous key is deleted. The enclosure 16 also has a mechanical or digital lock 19. The integrated internal storage 3 has more than one partition. One partition stores the information on the actions actually taken during the voting, and the other partitions store artificially generated information on any actions other than those actually taken during the voting. The device also has a print module 14 that enables the printing of the history of actions actually taken during the voting or actions other than those actually taken during the voting. If there is an attempt to induce the user to vote in a specified way, and this is proved by a history printout or by showing the history on the device, such a solution allows logging in the partition which stores the actions that are different than those actually taken but were desired by the inducing party, or, analogically, by showing an erroneous printout from the device.

### Example IV

The example includes the generation of an identifier, the verification of identity, and the anonymisation of keys as described in example II. Then the entities (E) authorised to vote are randomly divided into groups consisting of 10 entities. The entity (E1) sends to the external entity (EE) an inquiry, addressed to the other entities (E) in the group, about their preferences regarding the voting. The other entities also send inquiries (Z1) to the external entity (EE). Having collected the inquiries, the external entity (EE) sends them to all entities (E) in the group, and they respond according to their preferences. In this example, four options were available in the voting: "candidate 1", "candidate 2", candidate 3" and "candidate 4". The external entity (EE) collects the responses of the entities (E) and presents them as a sum. "Candidate 1" received 5 votes, "candidate 2" received 2 votes, "candidate 3" and "candidate 4" received 1 vote each, and "candidate 5" received 0 votes. The entities (E) cannot accept the aggregate result. Therefore, the entity (E1) is assigned to a new group together with 5 other entities (E). The actions related to the collection of preferences are repeated, and the external entity (EE) presents them to the entities in the group in a summarised form. "Candidate 1" received 7 votes, "candidate 2", "candidate 3" and "candidate 4" received 0 votes, and "candidate 5" received 1 vote. Thus, the entities (E) accept the aggregate result by signing it with the private key (PR). Further part of the voting is similar as in the previous examples.

### Example V

The example concerns anonymous voting wherein the entity (E1) uses the voting device described in example III. The entity (E1) pairs a computer having its own identifier (ID) with a device for anonymous voting, which also has its own identifier (ID), by making each device show their identifiers on the displays, verifying their correctness by the entity (E1) and confirming that on the device for anonymous voting. Then it generates for itself an identifier (ID1) in the form of a pair of keys, i.e. a private key (PR1) and a public key (PU1), and goes to an appropriate office to carry out the described procedure of identity verification and granting the voting right. The entity (E1) generates a new identifier (ID2), consisting of a pair of keys (PR2 and PU2), which takes over the voting right granted to the entity. The new identifier is stored on the device for anonymous voting in such a way that access to it is encrypted by symmetric encryption. Further actions are taken by the entity (E1) anonymously, with the use of a computer network that uses onion routing, in particular the Tor, i2p or Mashnet network. The data transmission via the onion network is carried out using an encryption scheme based on homomorphic encryption or zero knowledge proof selected in such a way that when one entity sends data to another entity via nodes ABC, the former entity is unable to predict the contents of specific intermediate steps of the processes of decrypting its message encrypted collectively into nodes ABC. Further voting procedure is analogous to example IV. The voting confirmation is printed by the print module 14 plugged into the USB port 13. During use, the device switches from mode I to mode II, where in mode I the intermediate area is charged via the USB port, downloads or buffers data from outside and sends outside the buffered data received in mode II, while in mode II the intermediate area feeds and charges the private area, transmits the buffered external information received in mode I to the private module and buffers the data originating from the private module, and when it is not in use, it performs random operations analogous to those carried out during normal use.

## Claims

1. Method of organisation of anonymous voting carried out through an electronic device within a decentralised or distributed database managed in the blockchain technology **characterized in that** each voting is assigned with an individual serial number (SN), wherein:
- before taking part in the voting, an entity (E) generates its own identifier (ID1) having the form of a pair of keys that includes a private key (PR1) and a public key (PU1), these being a combination of bits unique to each entity (E);
- the right to participate in the voting is given to the entity (E) by assigning the voting right to its identifier (ID1), wherein the identifier (ID1) allows for generating any number of subsequent identifiers (ID1+n) being pairs of keys (PR1+n, PU1+n), but the right to vote is assigned only to the last generated identifier (ID1+n);
- the entity (E) starts to vote, where all activities are performed by an anonymous computer network, and the procedure is participated by an external entity (EE), being any randomly chosen computer within the blockchain, wherein the external entity anonymises the identifiers of voting participants by randomly dividing, at least once, the entities (E) authorised to participate in the voting into groups, where each entity (E) generates for itself a new identifier (ID1+n+1) in the form of a new pair of keys (PR1+n+1, PU1+n+1), then each entity (E) within the group anonymously places its new public key (PU1+n+1) in the pool, and then, having received the keys from all entities (E) in the group, the external entity (EE) discloses the contents of the pool, and each entity verifies the number of keys and the presence of its public key (PU1+n+1) in the disclosed pool and confirms that with the private key (PR1+n) by signing the list of public keys contained in the disclosed pool,
- at the end, the entity (E), using the right to vote assigned to its public key (PU1+n+1), anonymously casts a vote in the voting (SN), which involves generating a transaction and placing it in the pool of non-recorded transactions visible to other users, then, having placed a transaction in the pool, authorised users (miners) commit themselves to recording the transaction in the appropriate blockchain, where it will be visible to all users;
- when the transaction is not recorded in the appropriate blockchain, the entity (E) records it by itself in another chosen blockchain that was intended for carrying out this voting and when casting a vote, the entity (E) receives a voting confirmation, and the voting result is calculated by each entity (E) individually, and the correctness of the voting is checked by each entity (E) individually.

2. Method according to claim 1, **characterized in that** granting of the right to participate in the first voting covers, subsequently: a one-off personal verification of the entity's (E) identity by an authorised person, assigning the entity's identity with the public key (PU1) it has generated, and storing complete information about the granted right in the appropriate blockchain, wherein the right to participate in subsequent voting is granted to the entity every time, separately for each voting and remotely.

3. Method according to claim 1, **characterized in that** at the stage of casting votes, the entities (E) participating in the voting are randomly divided into further groups whose members create a common password known to all of them and used to authorise the entire mutual communication, which groups include at least 1 member and are used to mix the votes so that, during the mixing, the entities (E) in the group at least once anonymously send the external entity an inquiry (Z1) about the preferences regarding the cast of the vote by other entities in the group and regarding the proposal that each entity in the group creates one new public key, and the external entity (EE), which is changed before each subsequent inquiry (Z1+n), sends an inquiry (Z1) to each entity (E) in the group, and when the replies are given, the preferences and the proposed new public keys are collected both by the external entity (EE) and by each entity (E) and presented to the entities (E) in the group as the proposed voting result in a summarised form along with a list of new public keys, which are evidence that the voting procedure has been properly completed, and the entities (E) accept the outcomes using private keys (PR1+n), only if no person from the group asked other members (anonymously) to cancel the procedure, and in the list of new public keys, they see (each one only once) their new public key, and the number of new keys and the number of votes are equal to the number of persons in the group, and the voting was either unanimous or only one entity (E) wants to vote for an option other than the other entities (E), once the proposed results are accepted by all entities (E) in the group, they are counted as votes cast, and the entities lose the right to further participation in the voting, but the entities (E) from the groups in which the proposed results were not accepted are divided into further groups, and the procedure is re-conducted until the last authorised entity (E) accepts the results.

4. Method according to claim 1, **characterized in that** the anonymous computer network uses onion routing.

5. Method according to claim 1, **characterized in that** the data transmission via the anonymous network is carried out using an encryption scheme based on homomorphic encryption or zero knowledge proof selected in such a way that, when user X sends data to recipient Y via nodes ABC, user X is unable to predict the contents of specific intermediate steps of the processes of decrypting his message encrypted collectively into nodes ABC.

6. Method according to claim 1, **characterized in that**, the electronic device has its identifier (ID) in the form of a pair of keys: a private key and a public key, where the identifier (ID) allows for generating further identifiers (ID1+n).

7. The device for anonymous voting, **characterized in that** it comprises a battery 1, at least one SD memory card reader 2, integrated internal storage 3, micro-controller of the system performing cryptographic operations 4, a system that communicates with the external device 5, and the master system 7, and accommodates at least one Faraday cage 8.

8. The device, according to claim 7, **characterized in that** it has an integrated display 11, an integrated keyboard 12, and the system communicating with the external device 5 has an integrated USB port 13 and a printed module 14 that enables the printing of activity history.

9. The device, according to claim 7, **characterized in that** it is divided into a private area 9, intermediate area 10 and external area 28, which are separated from one another with a Faraday cage 8, where the private area 9 includes the master system 7, the intermediate system 10 includes a system performing cryptographic operations 6, and the external system includes a display 11, integrated keyboard 12 and the system communicating with the external device 5.

10. The device, according to claim 7, **characterized in that** it has its own identifier (ID1) having the form of a pair of keys: a private key (PR1) and a public key (PU1), and is paired with the electronic device once the displays 11 of both devices show their identifiers (ID1), and the entity (E1) verifies them for correctness and confirms it using the device for anonymous voting, which, having been paired with the electronic device, allows the entity (E1) to affix an electronic signature with the entity's (E1) private key (PR).

11. The device, according to claim 7, **characterized in that** it has at least one switch system 15 that includes a plug 22, contact 23, drive system 24, micro-controller 25, battery 26 and buffer 27, wherein the switch system 15 switches the device from mode I into mode II, where in mode I the intermediate area is charged via the USB port 13, downloads or buffers data from outside and sends outside the buffered data received in mode II, and in mode II the intermediate area 10 feeds and charges the private area 9, transmits the buffered external information received in mode I to the private module 9, and buffers the data originating from the private module 9.

12. The device, according to claim 11, **characterized in that** the integrated internal storage 3 of the device is encrypted by symmetric encryption.

13. The device, according to claim 7, **characterized in that** the integrated internal storage 3 of the device has more than one partition, each partition having a separate access password, wherein one partition stores information on actions actually taken during the voting, and the other partitions store artificially generated information on actions being different from those actually taken during the voting.

14. The device, according to claim 7, **characterized in that** it further comprises a tight external enclosure 16 having a micro-controller 17 with a timer system 18 and an integrated memory 19 as well as a mechanical or digital lock 20, which are jointly fed by the battery 21 and record all attempts to access the device, and each record is signed with a current private key (PR1+n) of the device, and then a new identifier (ID1+n+1) is generated containing a pair of keys (PR1+n+1, PU1+n+1), while the previous keys (PR1+n, PU1+n) are deleted.

15. The device, according to claim 7, **characterized in that**, when not used by the entity (E), the device performs random operations analogous to those performed during normal use.
